# DEMANDE DE BREVET EUROPEEN

(11) **EP 1 637 291 A1**
(43) Date de publication de la demande: **22.03.2006**
(21) Numéro de dépôt: 04405581.2
(22) Date de dépôt: 15.09.2004
(51) Int. Cl.: B25H 1/00, B23B 49/00

(54) **Base réglable et coulissante pour perceuse ou machines-outils**

(71) Demandeur: Scotti, Carlo, 1219 Le Lignon, Genève (CH)
(72) Inventeur: Scotti, Carlo, 1219 Le Lignon, Genève (CH)

(57) **Abrégé**

L'idée comprend un mécanisme monté sur le corps d'une perceuse (1) autour du siège (2) destiné à la poignée, resserré par un collier (3) et deux brides (4) qui soutiennent les guides fixes (5) qui peuvent coulisser pour déterminer l'excursion la plus approprié, selon la longueur du foret et ils sont retenus entre eux, dans la partie supérieure, par un support semi-circulaire (6). Les tourillons coulissants (7) poussés par deux ressorts (8), assurent la base circulaire stabilisatrice (11) ; soutenue par deux pivots à elle solidaires tournants sur l'axe A1-B1, retenus par deux brides (15) qui font partie aux bouts des tourillons coulissants, contre la pièce à percer, pendant l'opération. Un support circulaire (16) sert à une mise à zéro du foret par rapport à la base (11) et comme brides butées (17) pour déterminer la profondeur du perçage. Les attaches rapides (12-13) peuvent recevoir et fixer des bases auxiliaires pour exécuter des travaux de différente difficulté.

## Description

La conception se rapporte aux perceuses, mais concerne toutes machines-outils portables aptes à l'adopter. L'idée peut être accessoire d'une machine, comme la machine-outil peut être conçue avec l'idée incorporée. Ce principe permet de : percer, fraiser, meuler, rectifier, tronçonner et scier. Pour une perceuse portable, en l'occurrence, il est difficile de respecter les axes de perçage exacts et d'exécuter des travaux variés avec précision. Le mécanisme conçu permet d'obtenir des résultats satisfaisants, dans la catégorie de machines-outils portables. Le mécanisme représenté a pour but d'effectuer des perçages parallèles, perpendiculaires et obliques, toujours guidé dans l'exécution par la base-circulaire-stabilisatrice 11, avec deux brides et butées 17 du support circulaire 16 permettent de déterminer la profondeur de coupe du foret, avec la mise a zéro de celui-ci. Les guides-fixes 5, reliés entre eux par un support semi-circulaire 6 et un transversal avec un collier 3 et deux brides 4 ; le collier sert à soutenir l'appareillage au corps de la perceuse 1, les brides permettent de les régler et choisir la position du trajet de course optimal et la mise à zéro du foret. La base-circulaire-stabilisatrice 11 peut, avec deux attaches rapides 12-13, accepter des bases accessoires différentes, pour effectuer plus de travaux et les effectuer plus aisément. Les tourillons coulissants 7 sont reliés entre eux par la base-circulaire-stabilisatrice 11 et la guident pendant les travaux ; deux pivots 14 à elle solidaires, pivotants dans les brides 15 des tourillons coulissants 7, dans un cas d'opération oblique.

## Revendications

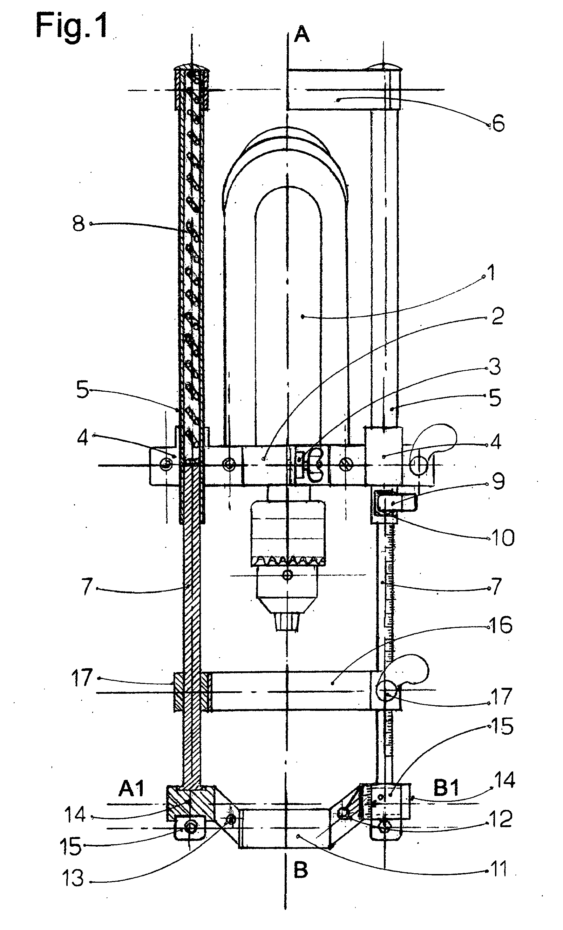

1. Tout l'appareillage est pivotant sur l'axe de la coupe (A-B ; Fig.1). Le mécanisme est monté sur le corps d'une perceuse (1), soutenu et resserré sur le siège (2) prévu à la poignée, par un support transversal avec un collier (3) et aux extrémités deux brides (4) qui resserrent les guides fixes (5) lesquelles peuvent être un ou plusieurs solidaires entre eux au moyen d'un support semi-circulaire (6) fixé sur la partie supérieure. Les guides-fixes (5) peuvent coulisser ou être bloqués, permettant ainsi, de régler l'ajustement de la course selon la longueur de l'outil. Les tourillons coulissants (7) reçoivent une poussée de deux ressorts (8) : descendant, par une force supérieure au poids de la perceuse, ascendant par une force supérieure aux ressorts, exercé par l'opérateur; ceux-ci ne peuvent pas se désenfiler, empêchés par la force de deux ressorts à pincette (9) qui les resserrent ; interposés entre les pincettes deux petits feutres (10) assurent la lubrification. La base circulaire stabilisatrice (11) qui immobilise la perceuse pendant l'opération de coupe, sert : de support, de récepteur pour les bases accessoire fixées avec l'aide de deux attaches rapides (12-13) et à incliner la perceuse sur les deux pivots (14) solidaires à celle-ci, qui relient les deux brides (15) aux bouts des tourillons (7) pivotants sur l'axe (A1-B1 ; Fig.1) le support circulaire (16) avec deux brides et butées (17) sert en cas de mise à zéro du foret, ou autres outils, et à déterminer la profondeur de perçage. Le concept de l'appareillage pivotant sur l'axe (A-B-Fig.1), peut, sous autres formes et dimensions, être adopté par différentes machines-outils portables.
